# EUROPÄISCHE PATENTSCHRIFT

(11) **EP 3 844 416 B1**
(45) Veröffentlichungstag und Bekanntmachung des Hinweises auf die Patenterteilung: **02.08.2023**
(21) Anmeldenummer: 19762349.9
(22) Anmeldetag: 29.08.2019
(51) Int. Cl.: F16D 65/12

(54) **BREMSSCHEIBE FÜR EINE SCHEIBENBREMSE**
BRAKE DISC FOR A DISC BRAKE
DISQUE DE FREIN POUR FREIN À DISQUE

(30) Priorität: 31.08.2018 DE 102018121330
(43) Veröffentlichungstag der Anmeldung: 07.07.2021
(73) Patentinhaber: Kristhäl GmbH, 77709 Wolfach (DE)
(72) Erfinder: HOMMEL, Günter, 71229 Leonberg (DE); SCHULZE, Eckehart, 71287 Weissach (DE)
(74) Vertreter: Westphal, Mussgnug & Partner Patentanwälte mbB
(86) Internationale Anmeldenummer: PCT/EP2019/073097
(87) Internationale Veröffentlichungsnummer: WO 2020/043828

(56) Entgegenhaltungen:
- DE-A1- 3 312 804
- DE-U1-202014 105 414
- GB-A- 2 285 104
- JP-A- H05 288 231
- US-A- 3 435 935

## Beschreibung

Die Erfindung betrifft eine Bremsscheibe für eine Scheibenbremse, vorzugsweise von Fahrrädern.

Scheibenbremsen von Fahrzeugen wie beispielsweise Fahrrädern, Motorrädern oder auch Autos, weisen eine Bremsscheibe auf, an welchen zur Verringerung der Geschwindigkeit der Fahrzeuge ein Bremselement angepresst wird. Durch die entstehende Reibung erhitzen sich die Bremsscheibe sowie die Bremsanlage. Dadurch können Schädigungen der Bremsscheibe oder der Bremsanlage auftreten, welche nachteilig für die Funktion der Scheibenbremse ist.

Als Stand der Technik werden die US 3 435 935 A, die DE 20 2014 105414 U1, die DE 33 12 804 A1, die JP H05 288231 A sowie die GB 2 285 104 A genannt.

Die Aufgabe der Erfindung besteht daher darin, eine Bremsscheibe in der Art weiterzubilden, dass die Bremsscheibe eine verbesserte Funktionalität aufweist und insbesondere eine Kühlung der Bremsscheibe erfolgen kann.

Die Aufgabe wird erfindungsgemäß gelöst durch eine Bremsscheibe mit den Merkmalen des Patentanspruchs 1.

Vorteilhafte Ausgestaltungen und Weiterbildungen der Erfindung sind in den abhängigen Ansprüchen angegeben.

Die erfindungsgemäße Bremsscheibe für eine Scheibenbremse, vorzugsweise von Fahrrädern, zeichnet sich dadurch aus, dass die Bremsscheibe eine erste und eine zweite Außenscheibe und eine zwischen den beiden Außenscheiben angeordnete Innenscheibe aufweist, wobei die Bremsscheibe mehrere Kammern aufweist, welche durch in der Innenscheibe angeordnete Ausnehmungen gebildet sind, und wobei die Bremsscheibe mehrere Durchbrechungen aufweist, welche die beiden Außenscheiben und die Innenscheibe durchsetzen, wobei die Kammern räumlich getrennt von den Durchbrechungen angeordnet sind.

Die Kammern bilden Hohlräume innerhalb der Bremsscheibe, in welchen ein Kühlmittel angeordnet werden kann. Dabei ist jede der Kammern durch die beiden Außenscheiben und die Innenwandung der Ausnehmung begrenzt. Dies ermöglicht eine einfache Fertigung. Die Durchbrechungen durchsetzen sowohl die Außenscheiben als auch die Innenscheibe und verhindern ein Aquaplaning zwischen der Außenscheibe und einem an der Bremsscheibe anliegenden Bremselement.

Vorzugsweise ist jede Kammer für sich genommen luft- und gasdicht verschließbar, um ein Entweichen des Kühlmittels vermeiden zu können.

Gemäß einer besonders bevorzugten Ausbildungsform der Erfindung ist in den Kammern ein Kühlmittel, insbesondere Natrium, angeordnet, welches bei etwa 97 °C seinen Aggregatzustand verändert und sich dadurch als guter Wärmeübertrager eignet.

Gemäß einer bevorzugten Ausführungsform der Erfindung sind etwa 60% des Volumens der Kammer mit dem Kühlmittel, insbesondere mit Natrium, welches insbesondere in Pulverform vorliegt, gefüllt. Eine derartige Füllhöhe ermöglicht eine besonders gute Wärmeableitung, da die Bremsscheibe in der Regel vertikal ausgerichtet angeordnet ist und bei Drehung der Bremsscheibe das Kühlmittel schwerkraftbedingt bei nur teilweiser Füllung sich in der Kammer bewegen kann. Insbesondere ist das Kühlmittel bei einer bei vertikal stehender Bremsscheibe im oberen Bereich angeordneten Kammer radial innenliegend in der Kammer angeordnet, während es bei einer unten liegenden Kammer radial außenliegend angeordnet ist. Bei Drehung der Bremsscheibe um 180° verteilt sich das Kühlmittel um, kann im radial außenliegenden Bereich, in welchem üblicherweise die Bremselemente angreifen und welcher daher eine höhere Temperatur aufweist, Wärme aufnehmen, welche bei einer weiteren Drehung um 180° an den radial innenliegenden Bereich der Bremsscheibe wieder abgegeben werden kann. Dadurch kann eine besondere effektive Kühlung der Bremsscheibe erreicht werden.

Gemäß einer bevorzugten Weiterbildung der Erfindung weist jede Kammer eine verschließbare Füllöffnung auf, welche nach Zusammenfügen der beiden Außenscheiben und der Innenscheibe eine Füllung der Kammer mit dem Kühlmittel, insbesondere mit Natrium, ermöglicht.

Vorteilhafterweise wird die Füllöffnung nach Befüllen der Kammern verschlossen, insbesondere verschweißt oder durch Pressnieten beispielsweise aus Edelstahl verschlossen, um ein Entweichen des Kühlmittels zu verhindern.

Vorzugsweise erstreckt sich jede der Kammern von der Nähe des Außenumfangs bis in die Nähe des Innenumfangs, um eine effektive Wärmeaufnahme bzw. Wärmeabgabe zu ermöglichen.

Eine besonders bevorzugte Ausführungsform der Erfindung sieht vor, dass sich ausgehend vom Außenumfang wenigstens ein Steg in die in der Innenscheibe angeordnete Ausnehmung erstreckt, um die Wärmeübertragung von der Bremsscheibe auf das Kühlmittel zu verbessern.

Vorteilhafterweise weist die Bremsscheibe vier bis zwanzig Kammern, vorzugsweise sechs bis zwölf Kammern, besonders bevorzugt sechs Kammern auf, wodurch eine günstige Verteilung des Kühlmittels über den Umfang der Bremsscheibe erreicht werden kann.

Gemäß einer bevorzugten Ausführungsform der Erfindung sind pro Kammer mindestens eine Durchbrechung, vorzugsweise ein bis sechs Durchbrechungen, besonders bevorzugt drei Durchbrechungen, vorhanden, wodurch einem Aquaplaning möglichst effektiv entgegen gewirkt werden kann.

Besonders bevorzugt sind die Durchbrüche in einem Winkelabstand zueinander angeordnet, welcher kleiner ist als ein an die Bremsscheibe anzulegendes Bremselement, insbesondere kleiner als die Länge des Bremselements im Umfangsrichtung der Bremsscheibe gemessen, wodurch sichergestellt wird, dass in jeder relativen Position zwischen dem Bremselement und der Bremsscheibe wenigstens eine Durchbrechung von dem Bremselement überdeckt wird, so dass ein Aquaplaning möglichst effektiv verhindert werden kann.

Die Durchbrüche sind vorteilhafterweise in der Nähe des Außenumfangs der Bremsscheibe angeordnet.

Vorzugsweise ist zwischen zwei benachbarten Durchbrüchen ein Bereich einer Kammer angeordnet, um eine möglichst effektive Kühlung in dem Abschnitt der Bremsscheibe, in welchem die höchste Wärmeentwicklung besteht, zu erreichen.

Die Bremsscheibe weist vorzugsweise eine Dicke von 1,8 mm bis 12 mm auf und ist damit besonders geeignet für leichtere Fahrzeuge wie beispielsweise Fahrräder, Elektrofahrräder oder Motorräder. Eine Bremsscheibe mit einer Dicke von 1,8 mm kann in gängigen Bremssätteln verwendet werden.

Die Bremsscheibe weist vorzugsweise einen Durchmesser von etwa 180 mm oder von etwa 203 mm auf, um gängige, normierte Bremsscheiben auf einfache Art und Weise ersetzen zu können.

Gemäß einer besonders bevorzugten Ausführungsform der Erfindung ist die Innenscheibe mit den beiden Außenscheiben durch Hochtemperaturlöten miteinander verbunden, wodurch eine besonders zuverlässige Verbindung, welche insbesondere luft- und gasdicht ist, erreicht werden kann.

Eine erfindungsgemäße Scheibenbremse weist eine erfindungsgemäße Bremsscheibe auf.

Die erfindungsgemäße Bremsscheibe kommt insbesondere bei einem Fahrrad, besonders bevorzugt einem Elektrofahrrad, zur Anwendung. Ein erfindungsgemäßes Fahrzeug, insbesondere Fahrrad, bevorzugt Elektrofahrrad, weist eine erfindungsgemäße Bremsscheibe auf.

Die Erfindung wird anhand der nachfolgenden Figuren ausführlich erläutert. Es zeigen:
- Figur 1: eine Draufsicht auf eine Außenscheibe eines Ausführungsbeispiels einer erfindungsgemäßen Bremsscheibe,
- Figur 2: eine Draufsicht auf eine Innenscheibe mit dahinter angeordneter Außenscheibe gemäß Figur 1 und
- Figur 3: einen Schnitt durch eine erfindungsgemäße Bremsscheibe mit einer Innenscheibe gemäß Figur 2, welche zwischen zwei Außenscheiben gemäß Figur 1 angeordnet ist.

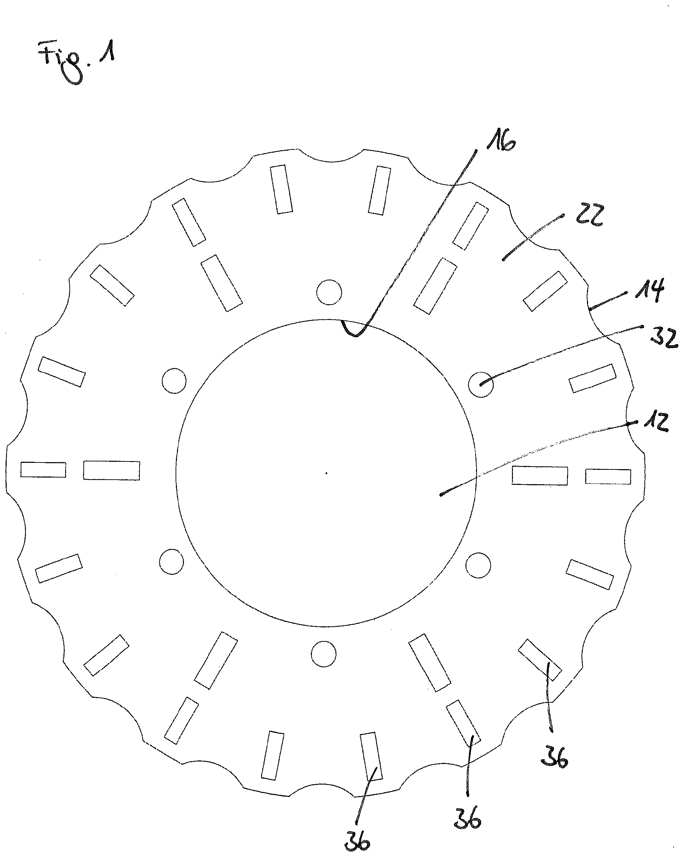

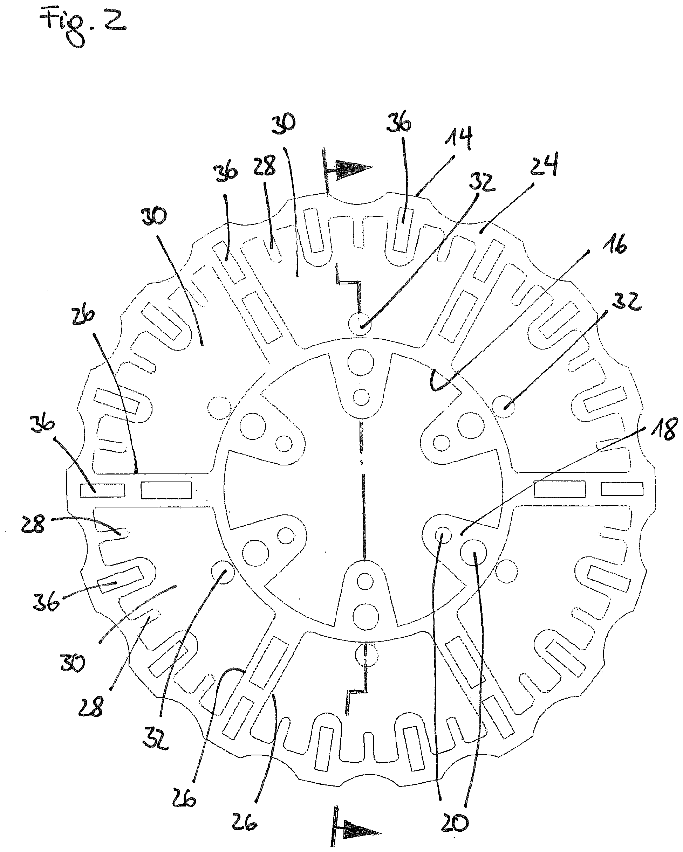

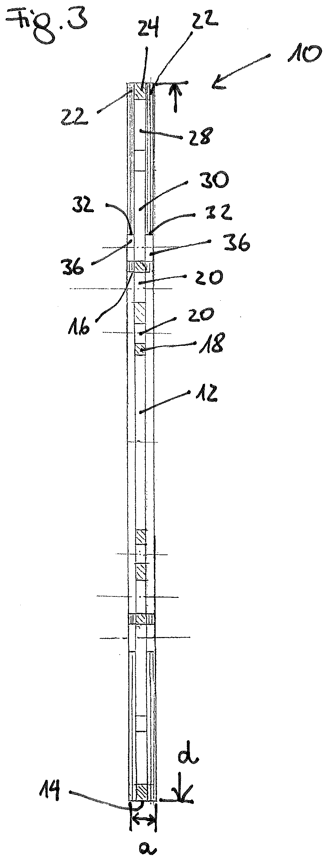

Figur 3 zeigt einen Schnitt durch ein Ausführungsbeispiel einer erfindungsgemäßen Bremsscheibe 10, welche eine erste und eine zweite Außenscheibe 22 und eine zwischen den beiden Außenscheiben 22 angeordnete Innenscheibe 24 aufweist. Eine Draufsicht auf die Außenscheibe 22 zeigt Figur 1. Figur 2 zeigt eine Draufsicht auf die Innenscheibe 24, hinter welcher eine Außenscheibe 22 gemäß Figur 1 angeordnet ist.

Die Bremsscheibe 10 weist eine Montageöffnung 12 sowie einen Außenumfang 14 und einen Innenumfang 16, welcher die Montageöffnung 12 begrenzt, auf. Dabei ist die Montageöffnung 12 insbesondere durch entsprechende zentrische Öffnungen in der Innenscheibe 24 und den beiden Außenscheiben 22 gebildet.

In die Montageöffnung 12 können mehrere, vorliegend sechs in gleichem Winkelabstand zueinander angeordnete Befestigungslaschen 18 ragen, welche insbesondere an der Innenscheibe 24 angeordnet sind, und welche mehrere, beispielsweise zwei, Öffnungen 20 zur Befestigung aufweisen können.

Die Bremsscheibe 10 weist mehrere Kammern 30 auf, welche durch in der Innenscheibe angeordnete Ausnehmungen 26 gebildet sind. Die Kammern 30 werden somit durch die Wandung der Ausnehmung 26 der Innenscheibe 24 und die beiden auf beiden Seiten der Innenescheibe 24 anliegenden Außenscheiben 22 begrenzt. Die Bremsscheibe 10 kann mehrere Kammern 30, beispielsweise vier bis zwanzig Kammern 30, vorzugsweise sechs bis zwölf Kammern 30, besonders bevorzugt wie in dem Ausführungsbeispiel dargestellt sechs Kammern 30, aufweisen.

Jede der Kammern 30 weist insbesondere eine Füllöffnung 32 auf, welche insbesondere in einer der beiden Außenscheiben 22, vorzugsweise in beiden Außenscheiben 22, angeordnet ist. Nach Befüllen der Kammer 30 mit einem Kühlmittel wird die Füllöffnung 32 oder die beiden Füllöffnungen 32 verschlossen, beispielsweise durch ein Verschlusselement 34, welches insbesondere in der Füllöffnung 32 verschweißt oder vernietet ist. Das Verschlusselement 34 kann aus Edelstahl gefertigt sein.

Jeder Kammer 30 ist für sich genommen luft- und gasdicht verschließbar. Dies kann beispielsweise dadurch erreicht werden, dass die Innenscheibe 24 mit den beiden Außenscheiben 22 durch Hochtemperaturlöten miteinander verbunden ist.

Als Kühlmittel wird vorzugsweise Natrium verwendet. Etwa 60% des Volumens der Kammern 30 können mit dem Kühlmittel, insbesondere dem Natrium, befüllt sein.

Jeder der Kammern 30 kann sich von der Nähe des Außenumfangs 14 bis in die Nähe des Innenumfangs 16 erstrecken. In die in der Innenscheibe 24 angeordnete Ausnehmung 26 kann sich ausgehend von dem Außenumfang 14 wenigstens ein Steg 28, beispielsweise drei Stege 28 pro Kammer 30, erstrecken.

Die Bremsscheibe 10 weist mehrere Durchbrechungen 36 auf, welche sowohl die Innenscheibe 24 als auch die beiden Außenscheiben 22 durchsetzen und welche räumlich getrennt von den Kammern 30 angeordnet sind. Die Durchbrechungen 36 können insbesondere nahe des Außenumfangs 14 der Bremsscheibe 10 angeordnet sein. Die Durchbrechungen 36 sind insbesondere gleichmäßig über den Umfang der Bremsscheibe 10 verteilt angeordnet.

Pro Kammer 30 kann wenigstens eine Durchbrechung 36, vorzugsweise ein bis sechs Durchbrechungen 36, besonders bevorzugt drei Durchbrechungen 36, vorgesehen sein. Insbesondere kann zwischen zwei benachbarten Durchbrechungen 36 ein Bereich einer Kammer 30 angeordnet sein, insbesondere, wenn auch die Durchbrechungen 36 in der Nähe des Außenumfangs 14 der Bremsscheibe 10 angeordnet sind. Die Durchbrechungen 36 können insbesondere in einem Winkelabstand zueinander angeordnet sein, welcher kleiner ist als die in Umfangsrichtung der Bremsscheibe 10 gemessene Länge eines an die Bremsscheibe 10 anzulegenden Bremselements.

Die Bremsscheibe 10 kann eine Dicke a von 1,8 mm bis 12 mm, beispielsweise eine Dicke von etwa 1,8 mm, aufweisen. Weiterhin kann die Bremsscheibe 10 einen Durchmesser d von etwa 180 mm oder von etwa 203 mm aufweisen.

Die Bremsscheibe 10 kommt insbesondere in einer Scheibenbremse zur Anwendung. Besonders bevorzugt kommt die Bremsscheibe 10 in einer Scheibenbremse von Fahrrädern, besonders bevorzugt Elektrofahrrädern, zur Anwendung.

### Bezugszeichenliste

- 10: Bremsscheibe
- 12: Montageöffnung
- 14: Außenumfang
- 16: Innenumfang
- 18: Befestigungslaschen
- 20: Öffnung
- 22: Außenscheibe
- 24: Innenscheibe
- 26: Ausnehmung
- 28: Steg
- 30: Kammer
- 32: Füllöffnung
- 34: Verschlusselement
- 36: Durchbrechung
- a: Dicke
- d: Durchmesser

## Patentansprüche

1. Bremsscheibe (10) für eine Scheibenbremse, vorzugsweise von Fahrrädern,
**dadurch gekennzeichnet, dass** die Bremsscheibe (10) eine erste und eine zweite Außenscheibe (22) und eine zwischen den beiden Außenscheiben (22) angeordnete Innenscheibe (24) aufweist, wobei die Bremsscheibe (10) mehrere Kammern (30) aufweist, welche durch in der Innenscheibe (24) angeordnete Ausnehmungen (26) gebildet sind, und wobei die Bremsscheibe (10) mehrere Durchbrechungen (36) aufweist, welche die beiden Außenscheiben (22) und die Innenscheibe (24) durchsetzen, wobei die Kammern (30) räumlich getrennt von den Durchbrechungen (36) angeordnet sind.

2. Bremsscheibe (10) nach Anspruch 1,
**dadurch gekennzeichnet, dass** jede Kammer (30) für sich genommen luft- und gasdicht verschließbar ist.

3. Bremsscheibe (10) nach einem der vorhergehenden Ansprüche,
**dadurch gekennzeichnet, dass** in den Kammern (30) ein Kühlmittel, insbesondere Natrium, angeordnet ist.

4. Bremsscheibe (10) nach Anspruch 3,
**dadurch gekennzeichnet, dass** etwa 60 % des Volumens der Kammer (30) mit dem Kühlmittel gefüllt sind.

5. Bremsscheibe (10) nach einem der vorhergehenden Ansprüche,
**dadurch gekennzeichnet, dass** jede Kammer (30) eine verschließbare Füllöffnung (32) aufweist.

6. Bremsscheibe (10) nach einem der vorhergehenden Ansprüche,
**dadurch gekennzeichnet, dass** die Füllöffnung (32) nach Befüllen der Kammer (30) verschlossen wird, insbesondere verschweißt oder durch Pressnieten vorzugsweise aus Edelstahl verschlossen wird.

7. Bremsscheibe (10) nach einem der vorhergehenden Ansprüche,
**dadurch gekennzeichnet, dass** sich jede der Kammern (30) sich von der Nähe des Außenumfangs (14) bis in die Nähe des Innenumfangs (16) erstreckt.

8. Bremsscheibe (10) nach einem der vorhergehenden Ansprüche,
**dadurch gekennzeichnet, dass** sich ausgehend vom Außenumfang (14) wenigstens ein Steg (28) in die in der Innenscheibe (24) angeordnete Ausnehmung (26) erstreckt.

9. Bremsscheibe (10) nach einem der vorhergehenden Ansprüche,
**dadurch gekennzeichnet, dass** die Bremsscheibe (10) vier bis zwanzig Kammern (30), vorzugsweise sechs bis zwölf Kammern (30), besonders bevorzugt sechs Kammern (30) aufweist.

10. Bremsscheibe (10) nach einem der vorhergehenden Ansprüche,
**dadurch gekennzeichnet, dass** pro Kammer (30) mindestens eine Durchbrechung (36), vorzugsweise ein bis sechs Durchbrechungen, besonders bevorzugt drei Durchbrechungen (36), vorhanden sind.

11. Bremsscheibe (10) nach einem der vorhergehenden Ansprüche,
**dadurch gekennzeichnet, dass** die Durchbrüche (36) in der Nähe des Außenumfangs (14) der Bremsscheibe (10) angeordnet sind.

12. Bremsscheibe (10) nach einem der vorhergehenden Ansprüche,
**dadurch gekennzeichnet, dass** zwischen zwei benachbarten Durchbrüchen (36) ein Bereich einer Kammer (30) angeordnet ist.

13. Bremsscheibe (10) nach einem der vorhergehenden Ansprüche,
**dadurch gekennzeichnet, dass** die Bremsscheibe (10) eine Dicke (a) von etwa 1,8 mm bis etwa 12 mm aufweist.

14. Bremsscheibe (10) nach einem der vorhergehenden Ansprüche,
**dadurch gekennzeichnet, dass** die Bremsscheibe (10) einen Durchmesser (d) von etwa 180 mm oder von etwa 203 mm aufweist.

15. Bremsscheibe (10) nach einem der vorhergehenden Ansprüche,
**dadurch gekennzeichnet, dass** die Innenscheibe (24) mit den beiden Außenscheiben (22) durch Hochtemperaturlöten miteinander verbunden ist.

16. Scheibenbremse mit einer Bremsscheibe (10) nach einem der vorhergehenden Ansprüche.

17. Fahrzeug, insbesondere Fahrrad, besonders bevorzugt Elektrofahrrad, mit einer Bremsscheibe (10) nach einem der Ansprüche 1 bis 15.

## Claims

1. Brake disc (10) for a disc brake, preferably for bicycles,
**characterized in that** the brake disc (10) comprises a first and a second outer disc (22) and an inner disc (24) arranged between the two outer discs (22), wherein the brake disc (10) comprises numerous compartments (30), which are formed by cutouts (26) arranged in the inner disc (24), and wherein the brake disc (10) comprises numerous through holes (36) which extend through the two outer discs (22) and the inner disc (24), wherein the compartments (30) are arranged spatially separated from the through holes (36).

2. Brake disc (10) in accordance with claim1,
**characterized in that** each compartment (30) can be individually closed in an air- and gas-tight manner.

3. Braking disc (10) in accordance with either of the preceding claims,
**characterized in that** a cooling agent, in particular natrium, is disposed in the compartments (30).

4. Braking disc (10) in accordance with claim 3,
**characterized in that** approximately 60% of the volume of the compartment (30) is filled with the cooling agent.

5. Braking disc (10) in accordance with any of the preceding claims,
**characterized in that** each compartment (30) comprises a closable fill opening (32).

6. Braking disc (10) in accordance with any of the preceding claims,
**characterized in that** the fill opening (32) is closed after the compartment (30) is filled, in particular **in that** it is welded closed or closed by means of pressed rivets.

7. Braking disc (10) in accordance with any of the preceding claims,
**characterized in that** each of the compartments (30) extend from the proximity of the outer circumference (14) to the proximity of the inner circumference (16).

8. Braking disc (10) in accordance with any of the preceding claims, **characterized in that**, originating from the outer circumference (14), at least one bar (28) extends into the cutout (26) arranged in the inner disc (24).

9. Braking disc (10) in accordance with any of the preceding claims, **characterized in that** the braking disc (10) comprises four to twenty compartments (30), preferably six to twelve compartments (30), particularly preferably six compartments (30).

10. Braking disc (10) in accordance with any of the preceding claims, **characterized in that**, in each compartment (30), preferably one to six through holes, particularly preferably three through holes (36), are provided.

11. Braking disc (10) in accordance with any of the preceding claims, **characterized in that** the through holes (36) are arranged in the proximity of the outer circumference (14) of the braking disc (10).

12. Braking disc (10) in accordance with any of the preceding claims, **characterized in that** a region of a compartment (30) is arranged between two adjacent through holes (36).

13. Braking disc (10) in accordance with any of the preceding claims, **characterized in that** the braking disc (10) comprises a thickness (a) of approximately 1.8 mm to approximately 12 mm.

14. Braking disc (10) in accordance with any of the preceding claims, **characterized in that** the braking disc (10) comprises a diameter (d) of approximately 180 mm or of approximately 203 mm.

15. Braking disc (10) in accordance with any of the preceding claims, **characterized in that** the inner disc (24) is connected to the two outer discs (22) by means of high temperature soldering.

16. Disc brake having a braking disc (10) in accordance with any of the preceding claims.

17. Motor vehicle, in particular a bicycle, particularly preferably an electric bicycle, having a braking disc (10) in accordance with any of claims 1 to 15.

## Revendications

1. Disque de freins (10) pour un frein à disque de préférence de vélo, **caractérisé en ce que**
le disque de freins (10) se compose d'un premier et d'un second disque extérieurs (22) et d'un disque intérieur (24) entre les deux disques extérieurs (22),
le disque de freins (10) ayant plusieurs chambres (30) formées par des évidements (26) du disque intérieur (24) et le disque de frein (10) a plusieurs passages (36) traversant les deux disques extérieurs (22) et disques intérieurs (24), les chambres (30) étant séparées dans l'espace par rapport aux passages (36).

2. Disque de freins (10) selon la revendication 1,
**caractérisé en ce que**
chaque chambre (30) peut être fermée séparément de manière étanche à l'air et aux gaz.

3. Disque de freins (10) selon l'une des revendications précédentes,
**caractérisé en ce que**
les chambres (30) contiennent un agent réfrigérant notamment du sodium.

4. Disque de freins (10) selon la revendication 3,
**caractérisé en ce que**
environ 60% du volume des chambres (30) est rempli avec l'agent réfrigérant.

5. Disque de freins (10) selon l'une des revendications précédentes,
**caractérisé en ce que**
chaque chambre (30) comporte un orifice de remplissage (32) qui peut se fermer.

6. Disque de freins (10) selon l'une des revendications précédentes,
**caractérisé en ce que**
l'orifice de remplissage (32) est fermé après remplissage de la chambre (30) notamment il est soudé ou fermé par des rivets à pression, de préférence en acier inoxydable.

7. Disque de freins (10) selon l'une des revendications précédentes,
**caractérisé en ce que**
chacune des chambres (30) s'étend à partir de la proximité de la périphérie extérieure (14) jusqu'à proximité de la périphérie intérieure (16).

8. Disque de freins (10) selon l'une des revendications précédentes,
**caractérisé en ce que**
au moins une entretoise (28) vient dans l'évidement (26) du disque intérieur (24) à partir de la périphérie extérieure (14).

9. Disque de freins (10) selon l'une des revendications précédentes,
**caractérisé en ce que**
le disque de freins (10) a jusqu'à vingt chambres (30), de préférence six à douze chambres (30) et d'une manière particulièrement préférentielle, six chambres (30).

10. Disque de freins (10) selon l'une des revendications précédentes,
**caractérisé en ce que**
par chambre (30) il y a au moins un passage (36), de préférence un à six passages notamment de manière préférentielle, trois passages (36).

11. Disque de freins (10) selon l'une des revendications précédentes,
**caractérisé en ce que**
les passages (36) sont prévus à proximité de la périphérie extérieure (14) du disque de freins (10).

12. Disque de freins (10) selon l'une des revendications précédentes, **caractérisé en ce que**
une zone d'une chambre (30) est prévue entre deux passages voisins (36).

13. Disque de freins (10) selon l'une des revendications précédentes, **caractérisé en ce que**
le disque de freins (10) a une épaisseur (a) d'environ 1,8 mm jusqu'à environ 12 mm.

14. Disque de freins (10) selon l'une des revendications précédentes, **caractérisé en ce que**
le disque de freins (10) a un diamètre (d) d'environ 180 mm ou d'environ 203 mm.

15. Disque de freins (10) selon l'une des revendications précédentes, **caractérisé en ce que**
le disque intérieur (24) est relié aux deux disques extérieurs (22) par soudage à haute température.

16. Frein à disque comportant un disque de freins (10) selon l'une des revendications précédentes.

17. Véhicule notamment vélo et de manière particulièrement préférentielle, vélo électrique comportant un disque de freins (10) selon l'une des revendications 1 à 15.
